# EUROPEAN PATENT SPECIFICATION

(11) **EP 2 367 437 B1**
(45) Date of publication and mention of the grant of the patent: **05.03.2014**
(21) Application number: 09763946.2
(22) Date of filing: 01.12.2009
(51) Int. Cl.: A23D 7/005, A23D 7/015, A23D 7/02

(54) **PROCESS FOR THE PREPARATION OF A FAT CONTINUOUS SPREAD**
VERFAHREN ZUR HERSTELLUNG EINES AUFSTRICHS MIT KONTINUIERLICHER FETTPHASE
PROCÉDÉ POUR LA PRÉPARATION D'UN PRODUIT À TARTINER À PHASE GRASSE CONTINUE

(30) Priority: 19.12.2008 EP 08172300
(43) Date of publication of application: 28.09.2011
(73) Proprietor: Unilever NV, 3013 AL Rotterdam (NL); Unilever PLC, London, Greater London EC4Y 0DY (GB)
(72) Inventor: DOBENESQUE, Marie, N, NL-3133 AT Vlaardingen (NL); FARR, Robert, S, NL-3133 AT Vlaardingen (NL); HERRERA ABELLAN, Carolina, NL-3133 AT Vlaardingen (NL); HUIZINGA, Hindrik, NL-3133 AT Vlaardingen (NL); KOPPERT, Remco, J, NL-3133 AT Vlaardingen (NL)
(74) Representative: Wurfbain, Gilles L.
(86) International application number: PCT/EP2009/066105
(87) International publication number: WO 2010/069752

(56) References cited:
- EP-A- 0 237 120
- WO-A-2006/087091
- GB-A- 2 208 296
- JP-A- 2 299 544
- US-A1- 2006 280 855

## Description

### Field of the invention

The present invention relates to a process for the preparation of a fat continuous spread.

### Background of the invention

Fat continuous food products are well known in the art and include for example shortenings comprising a fat phase and water in oil spreads like margarine comprising a fat phase and an aqueous phase.

The fat phase of margarine and similar edible fat continuous spreads is often a mixture of liquid oil (i.e. fat that is liquid at ambient temperature) and fat which is solid at ambient temperatures. The solid fat, also called structuring fat or hardstock fat, serves to structure the fat phase (being the case in for example a shortening as well as in a water in oil emulsion) and helps to stabilize the aqueous phase, if present, by forming a fat crystal network. For a margarine or spread, ideally the structuring fat has such properties that it melts or dissolves at mouth temperature. Otherwise the product may have a heavy and/or waxy mouthfeel.

Important aspects of a fat continuous spread like for example margarine and low fat spread, the low fat spread usually comprising up to 45 wt% fat on total composition, are for example hardness, spreadability and ability to withstand temperature cycling. Temperature cycling means that the product is subjected to low and high temperatures (e.g. when the consumer takes the product out of the refrigerator and leaves it for some time at the table prior to use). This may have a negative influence on the structure of the spread (like for example destabilization of the emulsion or oil-exudation).

Generally edible fat continuous food products like shortenings and margarines and similar edible fat continuous spreads are prepared according to prior art processes that encompass the following steps:
1. Mixing of the liquid oil, the structuring fat and if present the aqueous phase at a temperature at which the structuring fat is definitely liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

A disadvantage of these processes is that the complete composition (including the liquid oil, structuring fat and if present the aqueous phase) is subjected to a heating step and a cooling step. This requires a lot of energy. For a spread comprising for example 6 wt% structuring fat the whole composition (100 wt%) has to be heated and cooled.

Another disadvantage of the known processes is that the choice of fats that can practically be used as structuring agent is rather limited. If the melting point of the structuring agent is too high the melting properties in the mouth are unsatisfactory. If on the other hand, the melting point is too low, the emulsion stability will be negatively affected. Moreover the amount of saturated fatty acids

(SAFA) in the structuring agent is usually relatively high. Also trans fatty acid may be present. Some experts have called for reductions in these fatty acids to improve cardiovascular health.

Some consumers prefer spreads that have a low energy density (for example products that are low in total fat) and/or are low in SAFA but still have a good nutritional profile (by providing for example essential fatty acids like omega-3 and omega-6).

A further disadvantage of the known processes is that the product may deteriorate due to the changes in temperature caused by the heating and cooling step.

Alternative processes have been described wherein the structuring fat is added as fat powder (i.e. crystallized fat) thereby eliminating the need to heat the whole composition to above the melting temperature of the structuring fat.

EP 1865786 A and WO 2006/087091 disclose a process for the preparation of a spreadable edible dispersion wherein a mixture of oil and solid structuring agent particles is subjected to stirring and an aqueous phase is gradually added to the mixture until a dispersion is obtained. The solid structuring agent particles have a microporous structure of submicron size particles and can be prepared using a micronisation process. A high fat spreadable margarine (70 wt% fat) and low fat spreads (33 and 40 wt% fat) are disclosed. The aqueous phase only contains potassium sorbate and sodium chloride.

We have found that a fat continuous spread comprising up to 45 wt% fat prepared using fat powder may not always result in a spread of predictable and/or acceptable quality for the consumer on aspects like for example free water and spreadability, and depends at least in part on the characteristics of the aqueous phase.

It has been disclosed in the art that to be able to make a low fat spread using a conventional process like for example a votator process a specific aqueous phase is preferred.

EP 237 120 A1 discloses a process for the preparation of a spread containing less than 35 wt% fat by preparing a dispersion comprising from 10 to 35 wt% continuous fat phase and from 90 to 65 wt% dispersed aqueous phase, wherein the aqueous phase is a gel-forming composition having a specific viscosity at a shear rate of 17090 (1/s) at a temperature of 5 degrees Celsius. Specific aqueous phase compositions are disclosed. A fat phase is prepared comprising structuring fat and liquid oil that is heated and subsequently cooled to crystallize the structuring fat. This fat phase is then mixed with an aqueous phase to provide the spread.

It is an object of the present invention to provide a process to prepare an edible fat continuous spread that requires less energy to make, more specifically a low fat continuous spread that requires less energy to make.
It is another object of the present invention to provide a process to prepare an edible fat continuous spread of predictable quality, more specifically a low fat continuous spread of predictable quality.
A further object of the invention is to provide a process to prepare an edible fat continuous spread with improved properties like spreadability and/or heat stability and/or with less free water, more specifically a low fat continuous spread with improved properties like spreadability and/or heat stability and/or with less free water.

A still further object of the invention is to provide a process to prepare an edible fat continuous spread of predictable quality in a factory setting, more specifically a low fat continuous spread of predictable quality in a factory setting.

### Summary of the invention

It was found that one or more of the above objectives is attained by using an aqueous phase that has a specific viscosity and gel strength.

Accordingly, the invention relates to a process for the preparation of an edible fat continuous spread comprising an aqueous phase and up to 45 wt% fat, comprising the steps of:
a. mixing fat powder and oil wherein the fat powder comprises structuring fat to provide a slurry;
b. providing a gel forming aqueous phase;
c. mixing the slurry and aqueous phase to form an oil continuous emulsion; wherein the aqueous phase has a specific viscosity and gel strength.

### Detailed description of the invention

Weight percentage (wt%) is based on the total weight of the composition unless otherwise stated.
The terms 'fat' and 'oil' are used interchangeably. Where applicable the prefix 'liquid' or 'solid' is added to indicate if the fat or oil is liquid or solid at ambient temperature as understood by the person skilled in the art. The term 'structuring fat' refers to a fat that is solid at ambient temperature.
Ambient temperature is a temperature of about 20 degrees Celsius.

The process for the preparation of an edible fat continuous spread comprising an aqueous phase and up to 45 wt% fat, comprises the steps of:
a. mixing fat powder and oil wherein the fat powder comprises structuring fat to provide a slurry;
b. providing a gel forming aqueous phase;
c. mixing the slurry and aqueous phase to form an oil continuous emulsion; wherein
   - the slurry is kept at a temperature equal to or below 25 degrees Celsius;
   - the aqueous phase is kept at a temperature that is equal to or above the temperature sufficient to prevent gelation of the aqueous phase;
   - the aqueous phase is cooled prior to mixing to such an extent that the temperature of the mixture of slurry and aqueous phase is kept equal to or below 25 degrees Celsius; and
   - the aqueous phase has a viscosity of 1 to 10 Pa.s at a shear rate of 1 (1/s) at 60 degrees Celsius, a viscosity of more than 0.15 Pa.s at a shear rate of 100 (1/s) at 60 degrees Celsius and a gel strength G' at 5 degrees Celsius of 40 to 1000 Pa.

The process uses fat powder comprising structuring fat and does not require the need to form the crystal network to make the spread by heating and cooling the whole composition. Such processes have been described previously in for example EP 1865786 A. This process is characterized in that (part of) the structuring fat is pre-crystallized and does not form from the fat phase (comprising the structuring fat and liquid oil) optionally including the aqueous phase as is the case in conventional ways of preparing a spread. One of the main advantages of this process is that it requires less energy to make.

### Fat powder

The fat powder comprises structuring fat and preferably comprises at least 80 wt% of structuring fat, more preferably at least 85 wt%, even more preferably at least 90 wt%, still more preferably at least 95 wt% and most preferably at least 98 wt%. Most preferably the edible fat powder essentially consists of structuring fat.

The structuring fat may be a single fat or a mixture of different fats. The structuring fat may be of vegetable, animal or marine origin. Preferably at least 50 wt% of the structuring fat (based on total amount of structuring fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the structuring fat essentially consists of structuring fat of vegetable origin.

The structuring fat as present in the edible fat powder preferably has a solid fat content N10 from 50 to 100, N20 from 26 to 95 and N35 from 5 to 60.

The amount of fat powder used is suitably chosen such that the required structuring (i.e. stable emulsion) is obtained. It will be appreciated that the amount of fat powder depends on the amount of structuring fat in the fat powder and the desired amount of structuring fat on total product. Preferably the amount of structuring fat on total amount of product is 1 to 20 wt%, more preferably 2 to 15 wt% and even more preferably 4 to 12 wt%.

Suitable methods to prepare the fat powder include for example Super Critical Melt Micronisation (ScMM), also known as particles from gas saturated solutions (PGSS). This is a commonly known method and is for example described in J. of Supercritical Fluids 43 (2007) 181-190 and EP1651338.

The process according to the invention is especially beneficial for use with fat powders that have been prepared using an ScMM process. Preferably the fat powder in the process according to the invention is a fat powder obtainable by supercritical melt micronisation.

Preferably the fat powders used in the process according to the invention have a gel strength of 5 to 3500 Pa, preferably 100 to 3000, more preferably 500 to 2500 and even more preferably 1800 to 2200. We have found that the aqueous phases according to the invention work particularly well for such fat powders. The gel strength of the fat powder is defined as the value G' (G prime) of a standardized slurry made with the fat powder measured under standardized conditions. The protocol thereof is described in the experimental section below.

It is important that the fat powder is not subjected to temperatures at which the structuring fat melts as this severely reduces the ability to structure. This temperature depends on the structuring fat as used and can routinely be determined for example based on the solid fat content profile (i.e. N-lines) of the structuring fat. Preferably the fat powder, after production, has not been subjected to temperatures above 25 degrees Celsius, more preferably 15, even more preferably 10 and most preferably 5.

### Slurry

The slurry is provided by mixing fat powder and liquid oil. A suitable method to prepare a slurry is for example by mixing fat powder and liquid oil and applying vacuum de-aeration. The slurry may be prepared using standard mixing equipment common in the field of spreads making for such use, like for example obtainable from Esco-Labor.
Care must be taken to keep the temperature of the slurry equal to or below 25 degrees Celsius to prevent the crystallized structuring fat from melting and thereby at least partly loosing its ability to provide structure to the spread. However, it is allowed for the temperature of the slurry to incidentally rise above 25 degrees Celsius.

To keep the slurry in good condition, preferably the temperature of the slurry is 1 to 25 degrees Celsius, more preferably 3 to 20 and even more preferably 5 to 15.

The oil in the slurry is liquid oil and may be single oil or a mixture of different oils, and may comprise other components. Preferably at least 50 wt% of the oil (based on total amount of oil) is of vegetable origin, more preferably at least 60 wt%, even more preferably at least 70 wt%, still more preferably at least 80 wt%, even still more preferably at least 90 wt% and even still more further preferably at least 95 wt%. Most preferably the oil essentially consists of oil of vegetable origin.

### Aqueous phase

We have found that an aqueous phase having a viscosity of 1 to 10 Pa.s at a shear rate of 1 (1/s) at 60 degrees Celsius, a viscosity of more than 0.15 Pa.s at a shear rate of 100 (1/s) at 60 degrees Celsius and a gel strength G' at 5 degrees Celsius of 40 to 1000 Pa provides spreads that show improved spreadability for products stored for one week at 5 degrees Celsius and/or for products subjected to temperature cycling compared to spreads prepared using fat powder but with an aqueous phase not according to the present invention.

The spreadability is determined according to the protocol as described in the experimental section below. The aqueous phase according to the invention provides spreads that have a spreadability that is better than for spreads made with a different aqueous phase even after temperature cycling. Temperature cycling occurs when the consumer takes the spread out of the refrigerator for use and after some time puts the spread back in the refrigerator thereby subjecting the spread to lower, higher and lower temperatures. This may affect the structure of the spread.

The use of specific aqueous phases has been described before for low fat spreads made using the votator process. However, we have found that the aqueous phases disclosed in the prior art are not suitable for a process that uses fat powder as they result in spreads of lower quality or in some cases do not provide a fat continuous spread at all.

Preferably the spread comprises 5 to 40 wt% fat, more preferably 10 to 35 and even more preferably 15 to 30.

The viscosity and gel strength of the aqueous phase are determined according to the protocols as described in the experimental section.

It is important that the aqueous phase is a gel forming aqueous phase. That is, the aqueous phase must comprise one or more gelling agents in a concentration at or above the critical concentration. The resulting spreads will not be satisfactory if the aqueous phase does not gel.

Preferably the gel strength G' at 5 degrees Celsius of the aqueous phase is 40 to 900 Pa, preferably 45 to 850 and more preferably 50 to 800.

Preferably the aqueous phase has a viscosity of 2 to 8 Pa.s at a shear rate of 1 (1/s) at 60 degrees Celsius and more preferably 3 to 6.

Preferably the aqueous phase has a viscosity of no more than 2.0 Pa.s at a shear rate of 100 (1/s) at 60 degrees Celsius, more preferably no more than 1.7, even more preferably no more than 1.5 and still more preferably no more 1.

Preferably the aqueous phase has a viscosity of 0.16 to 2.0 Pa.s at a shear rate of 100 (1/s) at 60 degrees Celsius, more preferably 0.17 to 1.7, even more preferably 0.18 to 1.5 and most preferably 0.19 to 1.

The commonly known gelling and/or thickening agents may be used and include for example polysaccharides like starches, vegetable gums and pectin as well as proteins suitable for such use like gelatine.
Preferably the gelling and/or thickening agent are selected from the group consisting of physically or chemically modified starch, gelatine and combinations thereof.
Examples of the starches are acetylated distarch adipate such as the cook-up type Collfo 67™ and the pre-gelled Instant Clear Gel™ ex National Starch or the Merigel 341 ex Tate & Lyle.

It will be appreciated that the way of preparing the aqueous phase will depend on the type of ingredients selected. For example, the handling of modified starch and gelatine is well known to those skilled in the art. As the aqueous phase is a gel forming aqueous phase it is important to keep the temperature thereof sufficiently high to prevent gelation before the aqueous phase is actually mixed with the slurry. This helps to prevent possible clogging of equipment and makes the process especially suitable for application in a factory setting.

Preferably the aqueous phase is kept at a temperature of at least 40 degrees Celsius, more preferably at least 50 and even more preferably at least 60.

The aqueous phase is cooled prior to mixing the aqueous phase with the slurry to such an extent that the temperature of the mixture of slurry and aqueous phase is kept equal to or below 25 degrees Celsius. This to prevent the pre-crystallized structuring fat as present in the slurry to melt and thereby loose at least part of its structuring ability.

The aqueous phase is cooled to the desired temperature only shortly before mixing it with the slurry to prevent the aqueous phase from gelling which may result in a spread of lower quality.

The desired temperature of the aqueous phase prior to mixing thus depends on the temperature of the slurry. For example, a slurry temperature of about 5 degrees Celsius allows for an aqueous phase having a higher temperature taking into account the relative amounts of both phases.

Preferably the aqueous phase is cooled prior to mixing to a temperature of 1 to 25 degrees Celsius, more preferably 3 to 20 and even more preferably 5 to 15.

The aqueous phase may comprise other ingredients like for example salt, acidifying agent or preservative. The aqueous phase may also comprise oil, for example to aid the inclusion of hydrophobic ingredients in the aqueous phase.

The aqueous phase may also comprise non-gelling protein, like for example dairy protein. Non-gelling protein is known to enhance the taste perception of spreads but fat continuous spreads, especially low fat spreads, comprising non-gelling protein are more difficult to make. Preferably the aqueous phase comprises 0.05 to 1 wt% on total spread composition of non-gelling protein, more preferably 0.1 to 0.5 and even more preferably 0.1 to 0.3.

Preferably the non-gelling protein comprises dairy protein, as for example can be found in milk powder, skimmed milk powder and butter milk powder. Standard milk powder comprises about 35 wt% of dairy protein and this means that to include for example 0.5 wt% dairy protein in a spread about 1.4 wt% milk powder has to be added, of course depending on the actual amount of dairy protein present in the milk powder used.

### Examples

### Gel strength of the fat powder

The gel strength of the edible fat powder according to the invention is defined as the value for G' (G-prime) for a standardized slurry consisting of sunflower oil and the fat powder as determined according to the following protocol.

A fat slurry is prepared according to the method as described below ('Slurry preparation Set-up B') with the following modifications.
- 1 kg slurry is made.
- The amount of fat powder is standardized to a solid fat content in the total amount of slurry at 10 degrees Celsius of about 7 %. The solid fat content is verified using the solid fat content measurement as described below.
- The slurry is made homogeneous and smooth by applying an Ultra-turrax with an S 50 N - G 45 G type Dispersing Element (stator diameter 45 mm, rotor diameter 36 mm) for two minutes at 4000 rpm.

The fat slurry is characterized by a rheological measurement using the AR 2000 Rheometer (ex TA Instruments, USA). A time sweep measurement at 10 degrees Celsius is performed using the concentric cylinder system with the steel cylinder vane geometry. The dimension of the stator inner radius is 15 mm and of the rotor outer radius 14 mm; the immersed height is 42 mm and the gap is 4 millimeter. An oscillatory stress of 0.01 Pa is applied with a single angular frequency of 6.283 rad/s (1 Hz).
As preparation for the measurement the cylinder, pre-chilled at 10 degrees Celsius, is filled with approximately 29 ml sample, and the vane is put in the right position. The measurement starts with a conditioning step in which the sample equilibrates for 2 minutes at 10 degrees Celsius. In the time-sweep step the elastic and solid properties of the material are measured 300 times during 15 minutes. The elastic part of the material is represented by G'. The value for G' after 15 minutes was noted. This is the gel strength.

The solid fat content (SFC) in this description and claims is expressed as N-value, as defined in Fette, Seifen Anstrichmittel 80 180-186 (1978).
The solid fat content of the standardized slurry (to determine the gel strength of the fat powder) is measured directly after production at 10 degrees Celsius.

### Viscosity of the aqueous phase

The viscosity of the aqueous phase was measured using a Physica rheometer UDS200 using a cylinder-in-cylinder (couette) geometry (Physica Z3 serrated). The measurement was taken at a temperature of 60 degrees Celsius. The aqueous phase was prepared in the standard way wherein the final aqueous phase had a temperature of 60 degrees Celsius.

The viscosity of the samples was measured at 60 degrees Celsius at a shear rate of 1 (1/s) and 100 (1/s) respectively doing the actual reading after 5 minutes. This is the viscosity of the aqueous phase according to the invention at a shear rate of 1 (1/s) at 60 degrees Celsius and the viscosity at a shear rate of 100 (1 /s) at 60 degrees Celsius respectively.

### Gel strength G' of the aqueous phase

The gel strength of the aqueous phase was measured using a Physica rheometer UDS200 using a cylinder-in-cylinder (couette) geometry (Physica Z3 serrated). At the start of the measurement the temperature was 60 degrees Celsius. The measurement was performed at a constant frequency of 1 Hz and at a constant strain of 0.2%. The aqueous phase was prepared in the standard way wherein the final aqueous phase had a temperature of 60 degrees Celsius.

The sample (at 60 degrees Celsius) was loaded in the cylinder followed by cooling from 60 to 5 degrees Celsius at a cooling rate of 4 degrees Celsius per minute. After 60 minutes at 5 degrees Celsius the value of G' was determined by a oscillatory rheology measurement. This is the gel strength G' at 5 degrees Celsius of the aqueous phase according to the invention.

### Spreadability

Spreadability is determined according to the following protocol.
A flexible palette knife is used to spread a piece of the spread on to fat free paper. The spreading screen is evaluated according to standardized scaling. A value of 1 represents a homogeneous and smooth product without any defects, a 2 refers to the same product but then with small remarks as slightly inhomogeneous or some vacuoles, a 3 refers to the level where defects become almost unacceptable, like loose moisture or coarseness during spreading. A value of 4 or 5 refers to unacceptable products, where 4 refers to a product still having some spreading properties, but an unacceptable level of defects.

### Spreads production

Spreads with a composition according to Table 1 were made according to the methods as described below.

**Table 1 Spreads composition (wt% on total spread composition)**

| | Composition A | Composition B |
|---|---|---|
| AQUEOUS PHASE | | |
| Tap water | Balance to 100 wt% | Balance to 100 wt% |
| Gelling / thickening system | See Table 2 | See Table 2 |
| Dimodan HP | 0.3 | 0.2 |
| Sunflower oil | 4.7 | 3.1 |
| Salt | About 0.75 | About 0.75 |
| Preservatives | Minor amount | Minor amount |
| pH (aqueous citric or lactic acid solution) | 4.8 - 5.5 | 4.8 - 5.5 |
| | | |

| FAT PHASE | | |
|---|---|---|
| Sunflower oil | 18.5 | 20.4 |
| Fat powder (inES48) | 4.5 | 4.3 |

| | | |
|---|---|---|
| Dimodan HP: molecularly distilled mono/diacylglyceride mixture derived from fully hardened palm oil (90% monoglyceride) ex Danisco, DK. inES48: an interesterified mixture of 65% dry fractionated palm oil stearin with an Iodine Value of 14 and 35% palm kernel oil. Fat powder (inES48) is a fat powder of inES48 that was obtained using a supercritical melt micronisation process similar to the process described in Particle formation of ductile materials using the PGSS technology with supercritical carbon dioxide, P.Münüklü, Ph.D.Thesis, Delft University of Technology, 16-12-2005, Chapter 4, pp. 41-51. | | |

**Table 2 Gelling / thickening system (wt% on total spread composition)**

| Example | Gelling / thickening system | Composition | Set-up |
|---|---|---|---|
| 1 | 4 Merigel 341 / 1 gelatin | B | A |
| 2 | 4 Merigel 341 | A | A |
| C-0 | 3.5 Merigel 341 / 1 gelatin | B | A |
| C-1 | 10.44 Paselli SA-2 maltodextrin / 1.44 gelatin | A | B |
| C-2 | 12.96 N-oil / 0.22 Sodium caseinate | A | B |
| C-3 | 2.02 iota carrageenan | A | B |
| C-4 | 0.72 kappa-carrageenan / 0.49 locust bean gum | A | B |
| C-5 | 0.58 locust bean gum / 0.14 xanthan gum | A | B |
| C-6 | 14.4 N-oil | A | B |
| C-7 | 3.6 gelatin | A | B |

| | | | |
|---|---|---|---|
| Merigel 341, modified pre-gelled waxy corn starch (acetylated distarch adipate) ex Tate & Lyle Europe (pre-gelled starch, needs to be dispersed at 40 to 50 degrees Celsius at low shear) Paselli SA-2 ® maltodextrin, hydrolyzed potato starch with DE = 2 ex Avebe NL N-oil ®, hydrolyzed tapioca starch with a DE-value of about 4 to 5 ex National Starch US Sodium caseinate, Miprodan30 ex Arla Foods DK Iota-carrageenan CX 302 ex Danisco DK Kappa-carrageenan CL 220 ex Danisco DK Locust Bean Gum 047 ex Danisco DK Xanthan Gum FNCS ex Jungbunzlauer GmbH DE Gelatin: pig skin gelatin, bloom 240-265, 20 mesh, ex Gelita DE | | | |

### Spreads production Set-up A

### Slurry preparation Set-up A

First about 100 kg of a slurry was made by dispersing the fat powder in cold sunflower oil of about 5 degrees Celsius, while degassing under vacuum. The oil was weighed and pre-cooled to 5 degrees Celsius in a double wall Terlet 150 liter tank equipped with a vacuum device, a jet mixer (High Speed Dissolver Disk) and an anchor mixer (Low Speed Stirrer) and cooling system (ex Terlet NV, Zutphen, NL). The powder was weighed and added to the oil via a funnel connected to the bottom inlet of the tank. The powder was sucked into the oil using vacuum. The anchor stirrer operated at 30 rotations per minute (rpm) and the jet mixer at 287 rpm. After 15 minutes the vacuum was released and the jet mixing device was stopped. After 15 minutes the slurry was pumped into the fat feed tank of the spreads production line.

### Fat feed tank

The fat feed tank was a double walled stainless steel 200 liter vessel (Terlet) equipped with a gate stirrer operating at about 60 rpm. The tank was thermo-stated at 15 degrees Celsius.

### Aqueous phase

The aqueous phase was prepared by mixing three phases (I), (II) and (III). Phase I was a mixture of a part of the total water of 75 degrees Celsius and the dry ingredients Potassium Sorbate and Salt prepared in the standard way. Phase (II) was a blend of Dimodan HP and a part of the sunflower oil at 75 degrees Celsius and was poured into phase (I) while using an Ultra-Turrax operating at 3000 rpm for 15 minutes, forming a finely dispersed oil in water emulsion. Then the aqueous phase III containing the gelling/thickening agents was prepared in the standard way as obvious to the person skilled in the art, and added to the emulsion. The emulsion was pumped into a 150 liter stainless steel double wall feed tank, thermostated at 60°C, of the spreads production line. The pH was regulated with aqueous citric acid.

### Spreads preparation

Initially the slurry phase was pumped into the spreads production line including the pin stirrer (volume of 0.5 liter, inner diameter 94.5 mm, rotor two rows of 4 pins and two rows of 3 pins, stator one row of 6 pins) to fill it completely. Then both phases were pumped into the system at the required ratio using two flow controlled pumps (Mohno, Wijk & Boerma, NL) via a junction point. The aqueous phase was first pumped through a heat exchanger, which is a double wall stainless steel pipe of 6 meters in length with an internal diameter of 22.6 mm and a total volume of 2.4 liter in combination with a static mixer of 41.5 mm in length, to obtain an outlet temperature of about 6 degrees Celsius. After the junction point the mixture was pumped at about 110 kg/h into the pin stirrer, which resulted in a residence time of 16 seconds in the stirrer. The pin stirrer was thermo-stated at 8 degrees Celsius and operated between 1500 and 2500 rpm.

The final product from the pin stirrer was filled in 200 ml plastic tubs and stored at 5 degrees Celsius.

### Spreads production Set-up B

### Slurry preparation Set-up B

First 1.8 kg of a slurry was made by dispersing the fat powder in cold sunflower oil of about 5 degrees Celsius, while degassing under vacuum.

The oil was weighed and pre-cooled to 5 degrees Celsius in an Esco-Labor (ESCO-Vacuum mixer processing plant Type EL3 with 4.5 liter vessel in pharmaceutical version, ex ESCO-Labor AG, CH). The powder was weighed

using a pre-cooled (5 degrees Celsius) vessel and scoop, and added to the oil in several steps via a funnel on top of the Esco-Labor. The powder was sucked stepwise into the oil using vacuum. After each step a valve under the funnel was closed and the pressure dropped significantly. The density of the final slurry was measured to check if the de-aeration process was completed. Sometimes lumps were formed. After pouring the slurry into a pre-cooled can of 5 degrees Celsius, it was made homogeneous and smooth by applying an Ultra-turrax (T 50 basic ULTRA-TURRAX®, ex IKA® Werke GmbH & Co. KG, DE) for a few minutes at the lowest level of shear.

### Slurry phase

The slurry was brought into the fat feed tank of the spreads production line. The fat feed tank is a double walled stainless steel vessel with an internal diameter of 125 mm and a height of 310 mm, equipped with a ribbon stirrer, pushing the product downwards to the outlet opening in the bottom of the tank. The tank is thermo-stated at 8 degrees Celsius.

### Aqueous phase

A first mixture was prepared by mixing about half of the water (heated to about 90 degrees Celsius), and the remaining aqueous phase ingredients except for the gelling / thickening system at high shear. Then a solution of Dimodan HP in sunflower oil was added, and the mixture was stirred using an Ultra-Turrax stirrer for 15 min at 7600 rpm.
A second mixture was prepared by mixing the gelling / thickening system and the remaining water at low shear in the standard way as obvious to the person skilled in the art. For comparative samples C-1, C-2, C-6 this second mixture was prepared at a temperature above 90 degrees before adding the thickening ingredients Paselli SA-2 maltodextrin or N-oil and cooled to 60 degrees Celsius.

The first and second mixtures were mixed at low shear to obtain the aqueous phase. The pH was adjusted using an aqueous solution of lactic acid. The aqueous phase was not pasteurized. All mixing was done using an Ultra-turrax.

Then the aqueous phase was poured into the aqueous feed tank of the spreads production line. The aqueous feed tank is a double walled stainless steel vessel with an internal diameter of 175 mm and a height of 250 mm, equipped with an agitator (gate-stirrer type), thermo-stated at 60 degrees Celsius.

### Spreads preparation

The fat feed tank and the aqueous feed tank feed via a junction point into a 50 ml double walled stainless steel pin stirrer, with two rows of 4 stator and rotor pins. During the spreads production the aqueous phase was pumped first through a tubular heat exchanger, cooled at 1.5 degrees Celsius, to get a temperature drop from 60 to about 6-8 degrees Celsius, just before the junction point.

Initially the slurry phase was pumped into this system including the pin stirrer to fill it completely. Then both phases were pumped into the system at the required ratio using 2 gear pumps. After the junction point the mixture is pumped at about 12 kg/h, using a third gear pump, into the pin stirrer, which results in a residence time of 15 seconds in the stirrer. The pin stirrer is thermo-stated at 8°C and operated at 2000 rpm.
The final product was filled into 150 ml plastic tubs and stored at 5 degrees Celsius.

### Aqueous phase rheology

The rheology of the aqueous phases as used in the spreads examples from Set-up A and B was measured as given in Table 3.

**Table 3 Aqueous phase rheology**

| Example | A | B | C |
|---|---|---|---|
| 1 | 791 | 3.18 | 0.22 |
| 2 | 50 | 4.05 | 0.27 |
| C-0 | 738 | 0.61 | 0.11 |
| C-1 | 2 | 0.005 | 0.010 |
| C-2 | 0 | 0.010 | 0.010 |
| C-3 | 574 | 0.241 | 0.195 |
| C-4 | 9041 | 6.760 | 0.310 |
| C-5 | 69 | 15.40 | 1.090 |
| C-6 | 0 | 0.011 | 0.014 |
| C-7 | 3525 | 0.004 | 0.004 |

| | | | |
|---|---|---|---|
| A: gel strength G' at 5 degrees Celsius (Pa) B: viscosity at a shear rate of 1 (1/s) at 60 degrees Celsius (Pa.s) C: viscosity at a shear rate of 100 (1/s) at 60 degrees Celsius (Pa.s) | | | |

### Results

The spreads were assessed on their spreadability after storage of the spread for one week at 5 degrees Celsius, as well as after temperature cycling of the spread. Temperature cycling was done by storing the spread for one week at 5 degrees Celsius, followed by storing the spread for 16 hours at 20 degrees Celsius, followed by storing the spread at 5 degrees Celsius for one day.

The spreadability was not determined if no fat continuous spread could be made. If the spreadability after one week storage was assessed to be 5, the spreadability after temperature cycling was not determined.

The results are given in Table 4 below.

**Table 4 Spreadability of spreads**

| Example | After 1 week storage | Temperature cycling |
|---|---|---|
| 1 | 1-2 | 1-2 |
| 2 | 2 | 2 |
| C-0 | 2-3 (coarse) | 4 (starts to separate) |
| C-1 | 2 | 4 + free water |
| C-2 | Not measured (water continuous) | - |
| C-3 | 4 | 5 + free water |
| C-4 | 5 (coarse) | - |
| C-5 | 5 + free water | - |
| C-6 | 2.5 | 3.5 |
| C-7 | Not measured (water continuous) | - |

## Claims

1. Process for the preparation of an edible fat continuous spread comprising an aqueous phase and up to 45 wt% fat, comprising the steps of:
a. mixing fat powder and oil wherein the fat powder comprises structuring fat to provide a slurry;
b. providing a gel forming aqueous phase;
c. mixing the slurry and aqueous phase to form an oil continuous emulsion;
wherein
- the slurry is kept at a temperature equal to or below 25 degrees Celsius;
- the aqueous phase is kept at a temperature that is equal to or above the temperature sufficient to prevent gelation of the aqueous phase;
- the aqueous phase is cooled prior to mixing to such an extent that the temperature of the mixture of slurry and aqueous phase is kept equal to or below 25 degrees Celsius; and
- the aqueous phase has a viscosity of 1 to 10 Pa.s at a shear rate of 1 (1/s) at 60 degrees Celsius, a viscosity of more than 0.15 Pa.s at a shear rate of 100 (1 /s) at 60 degrees Celsius and a gel strength G' at 5 degrees Celsius of 40 to 1000 Pa.

2. Process according to claim 1 wherein the temperature of the slurry is 1 to 25 degrees Celsius, preferably 3 to 20 and more preferably 5 to 15.

3. Process according to claim 1 or 2 wherein the aqueous phase is kept at a temperature of at least 40 degrees Celsius, preferably at least 50 and more preferably at least 60.

4. Process according to any one of claims 1 to 3 wherein the aqueous phase is cooled prior to mixing to a temperature of 1 to 25 degrees Celsius, preferably 3 to 20 and more preferably 5 to 15.

5. Process according to any one of claims 1 to 4 wherein the aqueous phase has a viscosity of 2 to 8 Pa.s at a shear rate of 1 (1/s) at 60 degrees Celsius and preferably 3 to 6.

6. Process according to any one of claims 1 to 5 wherein the aqueous phase has a viscosity of 0.16 to 2.0 Pa.s at a shear rate of 100 (1/s) at 60 degrees Celsius, preferably 0.17 to 1.7, more preferably 0.18 to 1.5 and most preferably 0.19 to 1.

7. Process according to any one of claims 1 to 6 wherein the aqueous phase has a gel strength G' at 5 degrees Celsius of 40 to 900 Pa, preferably 45 to 850 and more preferably 50 to 800.

8. Process according to any one of claims 1 to 7 wherein the spread comprises 5 to 40 wt% fat, preferably 10 to 35 and more preferably 15 to 30.

9. Process according to any one of claims 1 to 8 wherein the fat powder is a fat powder obtainable by supercritical melt micronisation.

10. Spread obtainable by the process of any one of claim 1 to 9.

## Patentansprüche

1. Verfahren zum Herstellen eines essbaren, zusammenhängenden Fettaufstrichs, der eine wässrige Phase und bis zu 45 Gew.-% Fett aufweist,
das die folgenden Schritte aufweist:
a. Mischen von Fettpulver und Öl, wobei das Fettpulver ein strukturbildendes Fett aufweist, um eine Dickstoffsuspension bereitzustellen;
b. Bereitstellen einer gelbildenden wässrigen Phase;
c. Mischen der Dickstoffsuspension und der wässrigen Phase, um eine kontinuierliche Ölemulsion herzustellen;
wobei
- die Dickstoffsuspension bei einer Temperatur von gleich oder weniger als 25 °C gehalten wird;
- die wässrige Phase bei einer Temperatur gehalten wird, die gleich oder höher als die Temperatur ist, die ausreicht, um die Gelbildung der wässrigen Phase zu verhindern;
- die wässrige Phase vor dem Mischen soweit abgekühlt wird, dass die Temperatur des Gemischs von Dickstoffsuspension und wässriger Phase bei gleich oder weniger als 25 °C gehalten wird; und
- die wässrige Phase bei einer Scherrate von 1 (1/s) bei 60 °C eine Viskosität von 1 bis 10 Pa·s, bei einer Scherrate von 100 (1/s) bei 60 ° eine Viskosität von mehr als 0,15 Pa·s und bei 5 °C eine Gelfestigkeit G' von 40 bis 1000 Pa aufweist.

2. Verfahren nach Anspruch 1,
wobei die Temperatur der Dickstoffsuspension 1 bis 25 °C, vorzugsweise 3 bis 20 °C und stärker bevorzugt 5 bis 15 °C beträgt.

3. Verfahren nach Anspruch 1 oder 2,
wobei die wässrige Phase bei einer Temperatur von mindestens 40 °C, vorzugsweise mindestens 50 °C und stärker bevorzugt mindestens 60 °C gehalten wird.

4. Verfahren nach einem der Ansprüche 1 bis 3,
wobei die wässrige Phase vor dem Mischen auf eine Temperatur von 1 bis 25 °C, vorzugsweise 3 bis 20 °C und stärker bevorzugt 5 bis 15 °C abgekühlt wird.

5. Verfahren nach einem der Ansprüche 1 bis 4,
wobei die wässrige Phase bei einer Scherrate von 1 (1/s) bei 60 °C eine Viskosität von 2 bis 8 und vorzugsweise von 3 bis 6 Pa·s aufweist.

6. Verfahren nach einem der Ansprüche 1 bis 5,
wobei die wässrige Phase bei einer Scherrate von 100 (1/s) bei 60 °C eine Viskosität von 0,16 bis 2,0, vorzugsweise von 0,17 bis 1,7, stärker bevorzugt von 0,18 bis 1,5 und besonders bevorzugt von 0,19 bis 1 Pa·s aufweist.

7. Verfahren nach einem der Ansprüche 1 bis 6,
wobei die wässrige Phase bei 5 °C eine Gelfestigkeit G' von 40 bis 900, vorzugsweise von 45 bis 850 und stärker bevorzugt von 50 bis 800 Pa aufweist.

8. Verfahren nach einem der Ansprüche 1 bis 7,
wobei der Aufstrich 5 bis 40, vorzugsweise 10 bis 35 und stärker bevorzugt 15 bis 30 Gew.-% Fett aufweist.

9. Verfahren nach einem der Ansprüche 1 bis 8,
wobei das Fettpulver ein solches ist, das durch Feinstzerkleinerung einer superkritischen Schmelze erhalten werden kann.

10. Aufstrich, der nach dem Verfahren nach einem der Ansprüche 1 bis 9 erhalten werden kann.

## Revendications

1. Procédé pour la préparation d'un produit à tartiner comestible à phase grasse continue comprenant une phase aqueuse et jusqu'à 45 % en poids de phase grasse, comprenant les étapes de :
a. mélange d'une poudre de matière grasse et d'une huile, dans lequel la poudre de matière grasse comprend de la matière grasse structurante pour fournir une suspension ;
b. fourniture d'une phase aqueuse formant un gel ;
c. mélange de la suspension et de la phase aqueuse pour former une émulsion huileuse continue ;
dans lequel
- la suspension est maintenue à une température inférieure ou égale à 25 degrés Celsius ;
- la phase aqueuse est maintenue à une température qui est supérieure ou égale à la température suffisante pour empêcher une gélification de la phase aqueuse ;
- la phase aqueuse est refroidie avant le mélange à un point tel que la température du mélange de la suspension et de la phase aqueuse soit maintenue à une valeur inférieure ou égale à 25 degrés Celsius ; et
- la phase aqueuse a une viscosité de 1 à 10 Pa.s à une fréquence de cisaillement de 1 (1/s) à 60 degrés Celsius, une viscosité supérieure à 0,15 Pa.s à une fréquence de cisaillement de 100 (1/s) à 60 degrés Celsius et une résistance de gel G' à 5 degrés Celsius de 40 à 1000 Pa.

2. Procédé selon la revendication 1, dans lequel la température de la suspension est de 1 à 25 degrés Celsius, de préférence de 3 à 20 et de manière davantage préférée de 5 à 15.

3. Procédé selon la revendication 1 ou 2, dans lequel la phase aqueuse est maintenue à une température d'au moins 40 degrés Celsius, de préférence d'au moins 50 et de manière davantage préférée d'au moins 60.

4. Procédé selon l'une quelconque des revendications 1 à 3, dans lequel la phase aqueuse est refroidie avant le mélange à une température de 1 à 25 degrés Celsius, de préférence de 3 à 20 et de manière davantage préférée de 5 à 15.

5. Procédé selon l'une quelconque des revendications 1 à 4, dans lequel la phase aqueuse a une viscosité de 2 à 8 Pa.s à une fréquence de cisaillement de 1 (1/s) à 60 degrés Celsius et de préférence de 3 à 6.

6. Procédé selon l'une quelconque des revendications 1 à 5, dans lequel la phase aqueuse a une viscosité de 0,16 à 2,0 Pa.s à une fréquence de cisaillement de 100 (1/s) à 60 degrés Celsius, de préférence de 0,17 à 1,7, de manière davantage préférée de 0,18 à 1,5 et de manière préférée entre toutes de 0,19 à 1.

7. Procédé selon l'une quelconque des revendications 1 à 6, dans lequel la phase aqueuse a une résistance de gel G' à 5 degrés Celsius de 40 à 900 Pa, de préférence de 45 à 850 et de manière davantage préférée de 50 à 800.

8. Procédé selon l'une quelconque des revendications 1 à 7, dans lequel le produit à tartiner comprend 5 à 40 % en poids de phase grasse, de préférence 10 à 35 et de manière davantage préférée 15 à 30.

9. Procédé selon l'une quelconque des revendications 1 à 8, dans lequel la poudre de matière grasse est une poudre de matière grasse pouvant être obtenue par micronisation en fusion supercritique.

10. Produit à tartiner pouvant être obtenu par le procédé selon l'une quelconque des revendications 1 à 9.
